# EUROPEAN PATENT SPECIFICATION

(11) **EP 4 207 033 B1**
(45) Date of publication and mention of the grant of the patent: **02.12.2026**
(21) Application number: 21860893.3
(22) Date of filing: 26.05.2021
(51) Int. Cl.: G06Q 30/06, G06Q 30/0207, G06Q 30/0235, G06Q 30/0601

(54) **INFORMATION PROCESSING SYSTEM, INFORMATION PROCESSING METHOD, AND PROGRAM**
INFORMATIONSVERARBEITUNGSSYSTEM, INFORMATIONSVERARBEITUNGSVERFAHREN UND PROGRAMM
SYSTÈME DE TRAITEMENT D'INFORMATIONS, PROCÉDÉ DE TRAITEMENT D'INFORMATIONS ET PROGRAMME

(30) Priority: 31.08.2020 JP 2020145968
(43) Date of publication of application: 05.07.2023
(73) Proprietor: SATO Corporation, Tokyo 108-0023 (JP)
(72) Inventor: OGUCHI, Kentaro, Tokyo 108-0023 (JP)
(74) Representative: Grünecker Patent- und Rechtsanwälte PartG mbB
(86) International application number: PCT/JP2021/020070
(87) International publication number: WO 2022/044462

(56) References cited:
- EP-A1- 2 769 359
- WO-A1-2020/066775
- JP-A- 2015 156 148
- JP-A- 2019 144 950
- JP-A- 2020 061 142
- JP-A- 2020 107 028
- US-A1- 2004 054 634
- US-A1- 2020 111 053
- US-A1- 2020 111 053

## Description

### FIELD

The present invention relates to an information processing system, an information processing method, and a program.

### BACKGROUND

Amid increasing demand for online sales of products in recent years, systems for building online sales channels have been known. For example, one of known online sales methods includes the following steps: a step of collecting purchase request information that associates a plurality of products with a plurality of sets of data, from a terminal; a step of delivering a plurality of pieces of delivery date information corresponding to a plurality of delivery date, to a delivery system; and a step of delivering payment information for making a payment for the plurality of products, to a payment system (for example, Japanese Unexamined Patent Application Publication No. 2011-053921).

US Patent Application Publication US 2004/054634 A1 describes a sales system that is capable of determining variable prices of goods depending on a forthcoming expiry date, i.e. a difference between a manufacturing date and a current time/date data. Store equipment including servers and various further components is capable of determining a current price, depending on information retrieved from product information such as those encoded in barcodes attached to the products upon manufacturing. The equipment includes, in particular, an Internet server, with which customers are able to purchase products over internet e-commerce based on prices which vary according to their respective valid periods.

International Patent Application Publication WO 2013/126391 A1 describes an overhead antenna system for real-time locating of inventory. In particular, RFID technology is used. Further, electronic texts can be used tracks movement of customers within a store. The system can be used to reconcile inventory location or otherwise determined if something is out of place.

US Patent Application Publication US 2020/0311655 A1 describes an inventory tracking system, wherein data from tags in an interrogation so are connected by a wireless reader for evaluating human interactions with items such as products. In particular, RFID technology is used. By means of a touch sensor, it is detected whether an item associated with a wireless tag is touched.

### BRIEF SUMMARY

### TECHNICAL PROBLEM

Incidentally, in the current situation, there is a problem with online sales of products that are highly possibly reduced in price as best-by dates approach, in particular, perishable foods and the like.

First, while consumers tend to avoid products sold without price reduction although their best-by dates are close, they feel anxiety about purchasing products having close best-by dates without viewing them and thus prefer to purchase the products in stores.

On the other hand, in some cases, retailers such as retail stores, do business without intentionally conducting online sales of products having close best-by dates for fear of complaints from customers. For example, if a product whose best-by date is closer than that expected by a customer is delivered to the customer, the customer may not be satisfied therewith.

For these reasons, online sales of products, in particular, perishable foods and the like, is not performed. For stores, this causes a loss of opportunities to sell perishable foods and the like as well as an increase in food loss, and for consumers, this results in not receiving the convenience of online sales.

In view of the above, an object of the present invention is to promote online sales of products that can be price-reduction targets.

### SOLUTION TO PROBLEM

The present invention is defined by the features of the independent claims. Further advantageous features of embodiments of the present invention are the subject matter of dependent claims.

### ADVANTAGEOUS EFFECTS

The one aspect of the present invention enables promoting online sales of products that can be price-reduction targets.

### BRIEF DESCRIPTION OF DRAWINGS

FIG. 1 illustrates a mechanism of an online sales system of an embodiment.
FIG. 2 illustrates operations performed in a store from a manufacturing date to a best-by date of a perishable food, in the online sales system of the embodiment.
FIG. 3 illustrates preparation of products to be handed to a user, in the online sales system of the embodiment.
FIG. 4 illustrates a procedure for a user to receive products at a receiving place, in the online sales system of the embodiment.
FIG. 5 shows an example of screen transition of a product purchase application of a user terminal.
FIG. 6 schematically shows a system configuration of the online sales system of the embodiment.
FIG. 7 is a block diagram showing an internal configuration of each device of the online sales system of the embodiment.
FIG. 8 shows an example of data components of a product stock database.
FIG. 9 shows an example of data components of a product image database.
FIG. 10 shows an example of data components of a user database.
FIG. 11 shows an example of data components of a transaction history database.
FIG. 12 is a sequence chart showing an operation of the online sales system of the embodiment.
FIG. 13 is a sequence chart showing an operation of the online sales system of the embodiment.
FIGs. 14A and 14B show modification examples of a product label.
FIG. 15 is a flowchart that is executed by a store terminal in an online sales system related to a modification example.

### DETAILED DESCRIPTION

Hereinafter, an online sales system being an example of an information processing system will be described.

The online sales system of this embodiment enables a user to make an online purchase of products whose conditions can change with time, such as perishable foods, and other products. In more detail, before a product is purchased, condition information showing the condition of the product at the current time (e.g., at the time point the product becomes a price-reduction target) can be displayed by a user terminal.

A user can check the condition information of a product at the current time before purchasing (making a payment for) the product and can expect the condition of the product at the time of receiving it and using (cooking) it from the condition information thereof. Thus, the user can securely purchase the product, even online. The following describes image data or the like of a product, as an example of the condition information of a product.

### (1) Mechanism of Online Sales System of This Embodiment

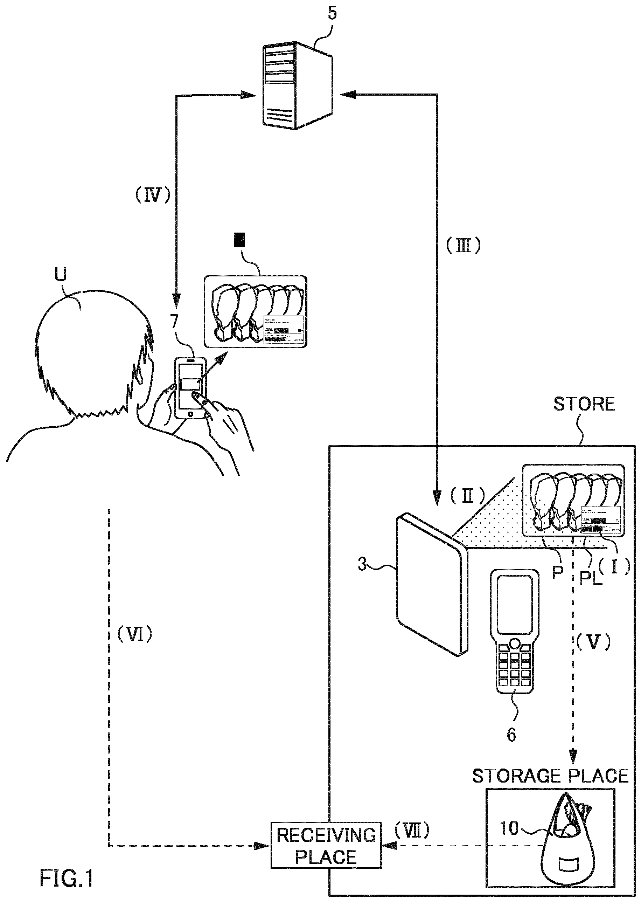

Hereinafter, an online sales system 1 of a retail store such as a supermarket which deals with foods and other products will be described as an example by referring to FIGs. 1 to 4.

FIG. 1 shows a schematic mechanism of the online sales system 1 of this embodiment. Steps (I) to (VII) in FIG. 1 represent a series of steps performed until products are handed to a user, in the online sales system 1 of this embodiment. FIG. 1 shows data communication by solid lines and shows movements of a person and things by dotted lines.

### · Step (I)

First, in a store, a product "P," such as a perishable food, is manufactured, and a product label PL (e.g., a weight label) is issued by using a label printer (not shown) and is attached to the product "P." The product label PL is printed with code information that contains, for example, a product code, information showing a best-by date (best-by date data; an example of expiration information), and a unique number showing an individual product (an example of individual identification information). In the case in which there are a plurality of products having the same product code and the same best-by date data in the store, a unique number for identifying each product can be set. In particular, for perishable food products, since they have different conditions in spite of having the same product code and the same best-by date data, a unique number is preferably set so that a user can select a product in consideration of the condition of each product.

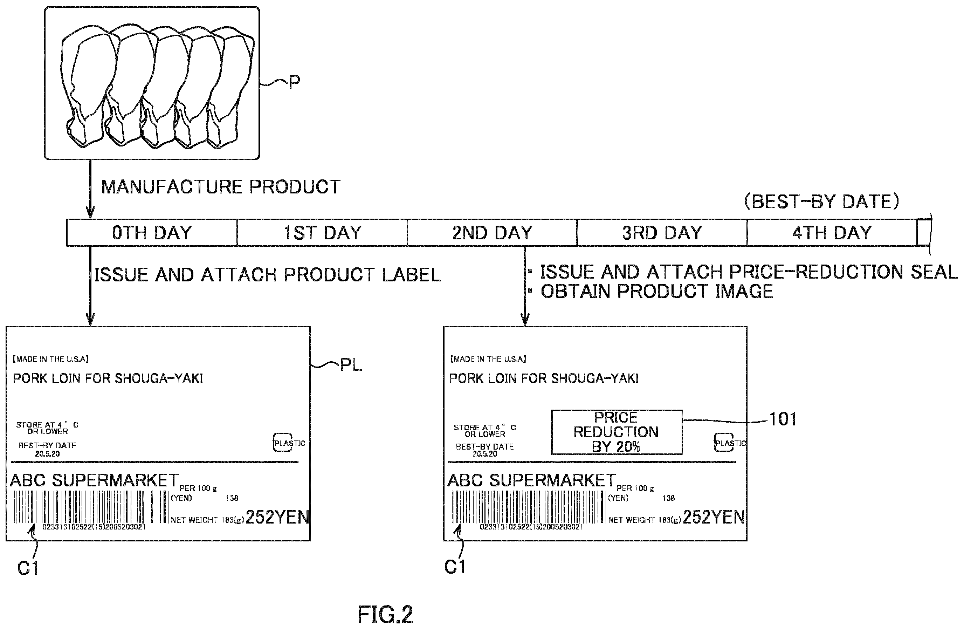

FIG. 2 shows operations in time sequence, which are performed in the store from a manufacturing date (the 0th day) to a best-by date (herein, the 4th day as an example) of a product.

Step (I) in FIG. 1 corresponds to an operation of the 0th day in FIG. 2, which includes manufacturing the product "P," creating the product label PL (weight label), and attaching it to the product "P." FIG. 2 also shows an exemplary product label PL. The product label PL in FIG. 2 contains, for example, code information C1.

In one example, the code information C1 contains a product code, best-by date data, and a unique number of a corresponding product "P." Any type of code can be used for the code information C1. For a bar code (one-dimensional code), CODE128, such as GS1-128, can be employed. The CODE128 enables bar coding all 128 characters of ASCII code, and thus, a bar code can be made so as to include all of a product code, best-by date data, and a unique number and is thereby convenient to perform source marking.

### · Step (II)

With respect to the product "P" that remains unsold after some time has passed, the store determines to reduce (mark down) the price of the product "P." In the example in FIG. 2, a store staff attaches a price-reduction seal 101 to a price-reduction target, the product "P," to notify consumers in the store of price reduction of the product "P," for example, on the 2nd day. Although being affixed to the product label PL in FIG. 2, the price-reduction seal 101 may be affixed to a part other than the product label PL of the product "P."

At this time, the store staff captures an image of the product "P," for example, to which the price-reduction seal 101 is attached, by using a store terminal 3. The price-reduction seal 101 may not be affixed to the product "P." Alternatively, a mark or the like for indicating a price-reduction target item, such as a mark "ITEM FOR CONTRIBUTION TO FOOD LOSS," may be shown instead of the price-reduction seal, in order to also be able to mark down without using a label.

As described later in relation to a modification example, a character string corresponding to a unique number may be shown on the product label PL. Showing the character string corresponding to a unique number enables immediately knowing that the product is a price-reduction target product. The character string corresponding to a unique number may be printed on the product label PL or may be hand written by a store staff.

### · Step (III)

The store staff operates the store terminal 3 to upload the image (an example of condition information) of the product "P" obtained in step (II), to a server 5 (an example of an information processing device), together with, for example, data contained in the code information C1 of the product label PL (i.e., the product code, the best-by date data, and the unique number). The uploaded data can be accessed from a user terminal 7 by operation of a user "U" who uses online sales. In the server 5, the image of the product "P" is associated with, for example, the unique number of the product "P."

### · Step (IV)

The user "U" who uses online sales can purchase products in the store online by operating the user terminal 7. The user terminal 7 can reach information of sales products by accessing a database in the server 5. Online sales and payment of products can be implemented by, for example, a web application.

The user terminal 7 can display, for example, a product code, a best-by date, and an image associated with a unique number, of a product "P" selected by the user "U." Thus, the user "U" can select a product to be purchased, while viewing the image of an individual product. In one example in which a plurality of products having the same product code (in the example in FIG. 2, "PORK LOIN FOR SHOUGA-YAKI" made in the U.S.A) and having the same best-by date are sold online, the user "U" can select and purchase a certain product (that is, a product with a certain unique number) in consideration of color (conditions such as freshness, at that part), thickness, quantity, quality, etc., of the product by comparing images of the respective products with each other. Thus, the user "U" can securely purchase even a product having a close best-by date.

### · Step (V)

In response to the server 5 notifying the store terminal 3 that the product "P" has been purchased online, a store staff moves the product "P" from a store shelf to a storage place in the store.

Although not shown in the drawing, the server 5 notifies the store terminal 3 of data related to product purchase of the user "U," and the store terminal 3 creates a picking list based on this data. The store staff performs a picking operation of products (an operation for picking up products) that are purchased online and an inspection operation by using, for example, a handy terminal 6, based on the picking list.

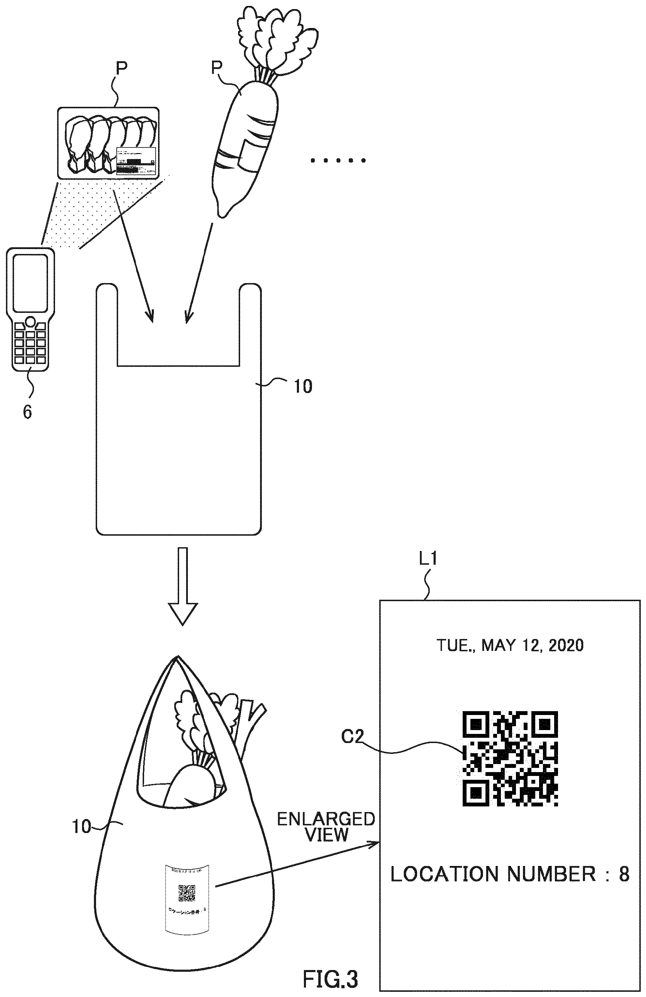

The picking list (not shown) contains a list of code information corresponding to each of one or more products to be picked up, in association with an order number issued at the time of payment for the product purchase. This code information is, for example, the same as the code information C1 printed on the product label PL (refer to FIG. 2). As shown in FIG. 3, the store staff successively picks up products, for example, while checking the code information contained in the picking list against the code information C1 of the product label PL attached to the product "P" by using the handy terminal 6, and the store staff puts all picked-up products in a container 10. Finally, a label L1 that is printed with, for example, a location number of the storage place and code information C2 corresponding to the order number, is issued by a label printer and is attached to the container 10.

### · Step (VI)

After an online payment for the products is completed, for example, the user "U" comes to the store to receive the products. The receiving method is not limited thereto, and the products can be delivered from the store to a place designated by the user "U."

The products are handed, for example, at a predetermined receiving place in the store (refer to FIG. 1). In order to certainly hand the products to the user "U" who has purchased them, the products are handed, for example, by checking three data against each other, as described below.

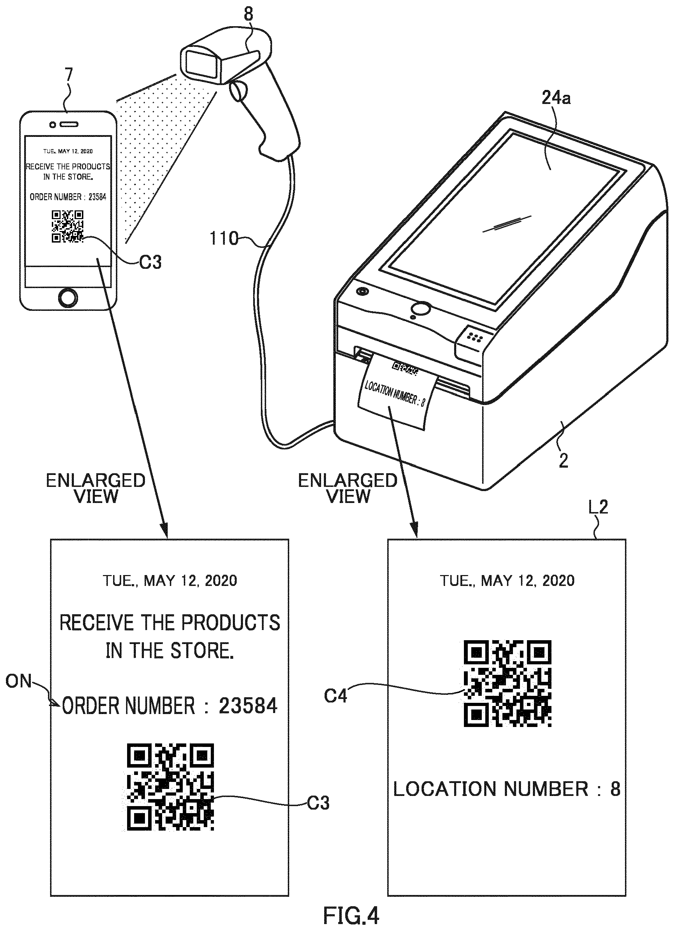

With reference to FIG. 4, for example, a label printer 2 and a code reader 8 are set up at the receiving place in the store. The label printer 2 and the code reader 8 are coupled by a cable 110.

The user "U" who comes to receive the products shows a screen that is displayed on the user terminal 7 (in the example in FIG. 4, a screen containing an order number ON and code information C3 corresponding to the order number ON), to a store staff. The store staff reads (scans) the code information C3 by using the code reader 8, and in response to this, the label printer 2 issues a label L2 that is printed with code information C4 corresponding to the order number ON and with the location number.

### ·Step (VII)

The store staff goes for the container 10 for the user "U" and brings it back from the storage place in the store to the receiving place by referring to the location number shown on the label L2.

Then, the store staff uses the code reader 8 to successively read the code information C3, which is displayed on the user terminal 7, the code information C4, which is contained in the label L2 issued by the label printer 2, and the code information C2, which is contained in the label L1 attached to the container 10 brought back from the storage place. As a result, only when the three pieces of code information correspond to each other, the store staff hands the container 10 containing the one or more products, to the user "U" (three-data check).

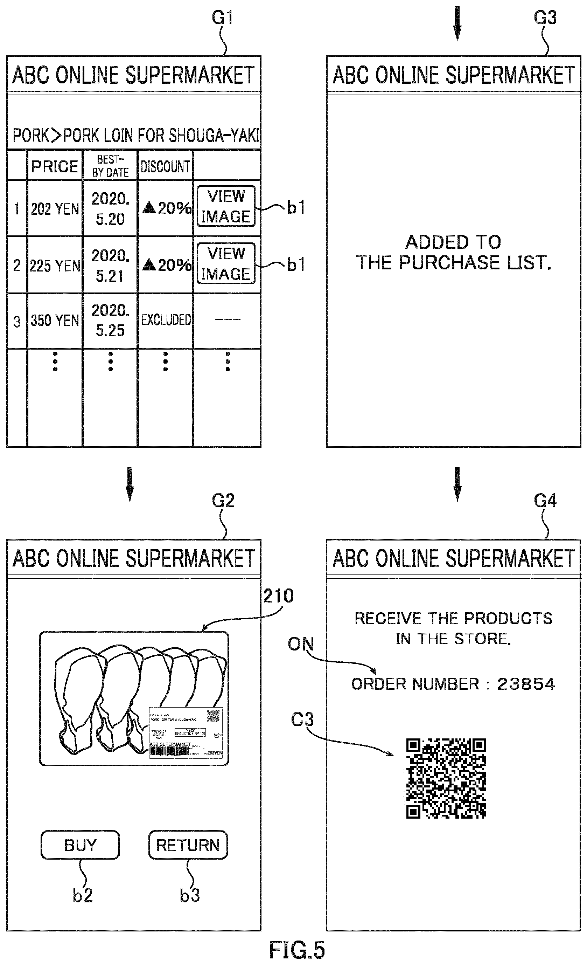

FIG. 5 shows an example of transition of screens displayed on the user terminal 7 in purchasing products online. For example, a web browser of the user terminal 7 requests and acquires data from a server program that operates on the server 5 and displays the data, whereby the screen transition in FIG. 5 is performed.

A screen G1 appears in response to selection of the type of products in the store, which are sold online. An example in which "PORK LOIN FOR SHOUGA-YAKI" is selected in the category "PORK" as the type of products is shown in the screen G1. Herein, the type of products corresponds to a product code. The screen G1 shows a list of a plurality of individual products corresponding to the selected type. Data of, for example, a best-by date and a discount rate, are shown with respect to the individual product in each line. Price-reduction target products are preferably assigned with unique numbers that are different from each other.

In the following description, each individual product may be referred to as an "individual product."

Individual products having close best-by dates among the plurality of individual products shown in the screen G1 are reduced in price, and an image of the individual product can be viewed by operating a button b1. In response to operation to one of the buttons b1 of respective individual products, the screen is changed to a screen G2, and an image 210 of the selected individual product appears. Thus, a user can make a purchase decision of the product after closely examining the condition of the product and can purchase the product at a reduced price when purchasing. In response to operation to, for example, a button b2, in the screen G2, the corresponding individual product is added to a purchase list (basket) (screen G3).

The user can select and add individual products to the purchase list by repeatedly performing operations on the screens G1 to G3. After operation (not shown) for confirming the purchase of products contained in the purchase list is finally performed, and a payment process of the products is completed in the server 5, an order number ON for identifying a transaction history is assigned, as shown in a screen G4. The code information C3 that is displayed in the screen G4 corresponds to the order number ON. As described by referring to FIG. 4, the code information C3 is required in receiving the products.

### (2) System Overview of Online Sales System

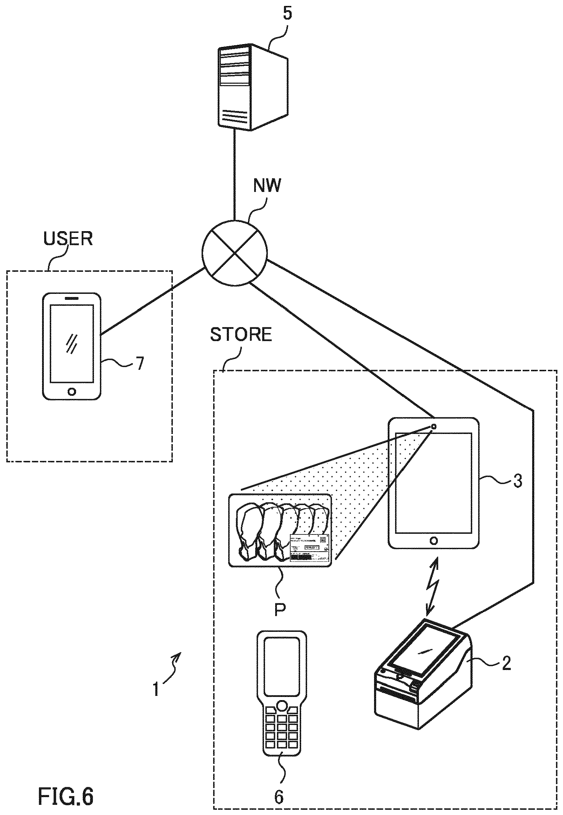

Hereinafter, a system configuration of the online sales system 1 of this embodiment will be described with reference to FIGs. 6 to 10.

FIG. 6 schematically shows a part of a system configuration of the online sales system 1 of this embodiment. As shown in FIG. 6, the online sales system 1 of this embodiment includes a store terminal 3 and a label printer 2 that are disposed in a store, a handy terminal 6, a user terminal 7 that is carried by a user who uses online sales, and a server 5 that provides an online sales service to the user.

### (2-1) Overall System

In the case in FIG. 6, the server 5 and the user terminal 7 are able to communicate with each other via a network NW, and the server 5 and the store terminal 3 are able to communicate with each other via the network NW. The server 5 and the label printer 2 are able to communicate with each other via the network NW. The network NW is, for example, the Internet, a local area network (LAN), or a wide area network (WAN).

The store terminal 3 is able to communicate with the label printer 2 via wired or wireless communication.

The label printer 2 is provided in the store and issues a product label PL (refer to FIG. 2) to be attached to a product "P" and a label L1 (refer to FIG. 3) to be attached to a container 10, based on print data. For example, for a perishable food product, the label printer 2 is disposed in a manufacturing site or the like of perishable foods in the store. The label printer 2 may be a small portable printer (mobile printer).

In performing the three-data check at the receiving place in the store, another label printer 2 and a code reader 8 are preferably set up in the receiving place, as shown in FIG. 4. In addition, the handy terminal 6 is preferably disposed in the store for the purpose of performing the picking operation.

The label printer 2 transmits print data to the server 5 in issuing a product label PL based on the print data. The print data contains a product code, best-by date data, and a unique number, as well as data such as a price per 100 gram and a net quantity (g). The server 5 updates a product stock database based on the received print data.

For example, for a perishable food product, at the time the product is manufactured in the store, a product label PL is issued while print data is provided to the server 5 and the product stock database is updated.

The store terminal 3 provides information related to products in the store to the server 5. The server 5 updates each type of database (described later) necessary for online sales, based on the information provided from the store terminal 3.

The store terminal 3 is, for example, a tablet computer device, a laptop computer device, or a smartphone.

The store terminal 3 has an imaging function for capturing an image of a product "P" in the store. The store terminal 3 transmits, to the server 5, information (e.g., a product code, best-by date data, and a unique number) contained in code information (e.g., code information C1 in FIG. 2) of a product label PL attached to the product "P," and an image of the product "P," for example, at the time it becomes a price-reduction target, in association with each other.

The server 5 provides a web service related to online sales, to the web browser of a client, the user terminal 7.

For example, upon receiving a browsing request of sales products from the user terminal 7, the server 5 retrieves necessary data from a database (described later) and returns HTML documents containing this data, to the web browser. In addition, the server 5 performs a payment process in conjunction with a payment server (not shown) upon receiving a payment request of products from the user terminal 7.

The server 5 transmits a delivery instruction containing data related to products purchased by a user and an order number, to the store terminal 3.

The user terminal 7 is, for example, a tablet computer device, a laptop computer device, or a smartphone.

As described above, the server 5 has a web browser and communicates with the user terminal 7 via HTTP communication to execute displaying information related to products for online sales, transmitting a payment request of products to the server 5, and other processes.

### (2-2) Configuration of Each Device

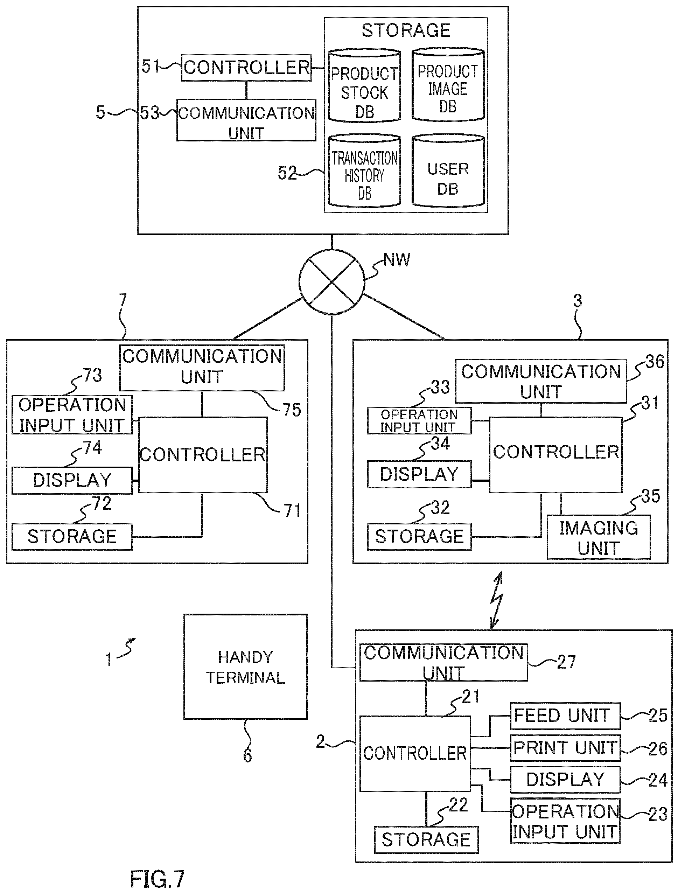

Next, a configuration of each device in FIG. 7 will be described with reference to FIG. 7. FIG. 7 is a block diagram including internal configurations of the store terminal 3, the label printer 2, the user terminal 7, and the server 5 in the online sales system 1 of this embodiment.

### (2-2-1) Store Terminal 3

As shown in FIG. 7, the store terminal 3 includes a controller 31, a storage 32, an operation input unit 33, a display 34, an imaging unit 35, and a communication unit 36.

The controller 31 is composed mainly of a microprocessor and memories (read-only memory (ROM) and random access memory (RAM)) and controls the whole store terminal 3. In order to implement the online sales system in conjunction with the server 5, the microprocessor loads a program from the ROM and executes it.

For example, the controller 31 receives a delivery instruction, which contains data related to products purchased by a user and an order number, from the server 5, and it displays this data on the display 34.

The controller 31 receives data related to product purchase of a user from the server 5 and creates a picking list based on this data. As described above, the picking list contains a list of code information corresponding to each of one or more products to be picked up, in association with an order number issued at the time of payment for the product purchase. The picking list is necessary in performing the picking operation and the inspection operation of products purchased online, by using the handy terminal 6.

The controller 31 acquires a unique number to be assigned to a product that is newly manufactured (or stocked) and determines a location number of a storage place of products sold online.

The storage 32 is a storage device, such as a solid state drive (SSD), and it stores image data of products (individual products) in the store obtained by the imaging unit 35. The storage 32 may store information (e.g., a product code, best-by date data, and a unique number) of a product, which is acquired from the image data.

The operation input unit 33 includes one or more input devices such as a touch panel input device provided to a display panel, a mouse, and a keyboard, and it receives operation input by a store staff.

The display 34 includes a display panel, such as a liquid crystal display (LCD), and a display driving circuit, and it shows results of executing processes performed by the controller 31.

The imaging unit 35 has, for example, an optical lens and an imaging device (image sensor) that converts incident light from the optical lens into an electric signal, and it successively generates a digital image. For example, the imaging unit 35 obtains image data of products (individual products) in the store.

The controller 31 analyzes code information on a product label in the image data obtained by the imaging unit 35, to extract a product code, best-by date data, and a unique number of the corresponding product and performs image recognition to extract data of a price and a discount rate of the product in the image data. The controller 31 transmits the product code, the price data, the discount rate data, the best-by date data, and the unique number of the product, and the image data, in association with each other, to the server 5 via the communication unit 36.

The communication unit 36 is a communication interface for communicating with the server 5 and the label printer 2.

The product code is an example of product information and may be a one-dimensional code (bar code) or a two-dimensional code (e.g., a QR code (registered trademark)). The method of acquiring product information from a product is not limited, and various kinds of methods can be employed. For example, for textual information corresponding to product information shown on a product, a photographic image containing the textual information is captured, and the textual information is obtained from this photographic image by an image recognition technique.

### (2-2-2) Label Printer 2

As shown in FIG. 7, the label printer 2 includes a controller 21, a storage 22, an operation input unit 23, a display 24, a feed unit 25, a print unit 26, and a communication unit 27. An example of the label printer 2 includes, but not specifically limited to, a thermal printer.

The controller 21 is composed mainly of a microprocessor and memories (ROM and RAM) and controls the whole label printer 2.

The storage 22 is a non-volatile memory and is, for example, an SSD, such as a flash memory. The storage 22 stores, in addition to firmware, label issue data for issuing a label used in the store, a label editing program for editing the label issue data to create print data, and other information.

The operation input unit 23 includes, for example, a touch panel input mechanism that is mounted to the display panel of the display 24.

The display 24 includes a display panel, such as an LCD, and a display driving circuit, and it displays a result of executing the label editing program.

In the state in which the label editing program is executed, for example, a graphical user interface (GUI) for enabling a store staff to edit print contents that should be printed on a label is provided. In one example, a product code, best-by date data, and a unique number, as well as data such as a price per 100 gram and a net quantity (g), which are input by a store staff via the operation input unit 23, are incorporated into a predetermined label format, whereby print data for issuing a product label (e.g., a weight label) is created.

The controller 21 issues a product label and a shipping label based on the print data. In more detail, the controller 21 sequentially transmits line data, which is data of each line of the print data, to the print unit 26. The feed unit 25 and the print unit 26 perform printing based on the line data that is sequentially transmitted.

The feed unit 25 includes a platen roller (not shown) and includes a motor driving circuit and a motor (which are not shown), and it feeds continuous paper in the label printer 2. The continuous paper is, for example, paper having a strip release paper and a plurality of labels that are temporarily attached on the strip release paper. On the basis of a feed request of the firmware, the motor driving circuit drives the motor that controls rotation of the platen roller, to feed the continuous paper.

The print unit 26 includes a thermal head and a head driving circuit (which are not shown). The head driving circuit selectively supplies electric current to each heating element of the thermal head based on the line data, to print a label on the continuous paper.

The communication unit 27 is a communication interface for communicating with the store terminal 3.

The controller 21 transmits the print data to the server 5 via the communication unit 27 in issuing a product label PL based on the print data. As described above, the print data contains a product code, best-by date data, and a unique number, as well as data such as a price per 100 gram and a net quantity (g). The product stock database is updated in the server 5 based on the data contained in the print data. In short, in the online sales system 1, issuing the product label PL and updating the product stock database are performed together.

### (2-2-3) User Terminal 7

As shown in FIG. 7, the user terminal 7 includes a controller 71, a storage 72, an operation input unit 73, a display 74, and a communication unit 75.

The controller 71 is composed mainly of a microprocessor and memories (ROM and RAM) and controls the whole user terminal 7. In one example, the microprocessor contained in the controller 71 executes, for example, a web browser and displays the execution result on the display 74. The web browser communicates with, for example, the server 5, by HTTP or the like, and it transmits a predetermined data request (e.g., an image request) or process request (e.g., a payment request) to the server program operating on the server 5, to acquire necessary data (HTML documents and the like) from the server program and to display it. Thus, the user terminal 7 can use the online sales service that is provided, for example, by the server 5. Examples of the data that is acquired from the server program include image data and data of an order number.

The controller 71 executes the web browser to function as a display controller that acquires image data corresponding to, for example, a product code of a product, which is selected by a user, and information of an offered price (offered price information) of the product from the server 5 and that causes the display 74 to display them. In one example in which a unique number (an example of individual identification information) of a product is selected by a user, the display controller acquires image data corresponding to the selected unique number from the server 5 and causes the display 74 to display it. The unique number is selected on the display 74, for example, as shown in the screen G1 in FIG. 5.

The storage 72 is a non-volatile memory and is, for example, a solid state drive (SSD), such as a flash memory. The storage 72 stores, for example, authentication information used in accessing the web browser or the server 5.

The operation input unit 73 is, for example, a touch panel input device that is provided to a display panel of the user terminal 7.

The display 74 includes a display panel, such as an LCD, and a display driving circuit, and it shows web pages and so on for online sales on the web browser.

The communication unit 75 is a communication interface for communicating with the server 5.

### (2-2-4) Server 5

As shown in FIG. 7, the server 5 includes a controller 51, a storage 52, and a communication unit 53.

The controller 51 is composed mainly of a microprocessor and memories (ROM and RAM) and controls the whole server 5. In one example, the microprocessor contained in the controller 51 loads and executes a server program recorded in the storage 52. In response to, for example, a predetermined data request or process request from the web browser of the user terminal 7, the server program creates HTML documents and the like related to online sales of products based on each type of database stored in the storage 52, or it executes a predetermined process such as a payment process of products. In short, in the state in which the microprocessor executes the server program, a web application or the like related to online sales is implemented.

The storage 52 (an example of a storage) is a mass storage device, such as a hard disk drive (HDD), and it stores a product stock database (product stock DB), a product image database (product image DB), a transaction history database (transaction history DB), and a user database (user DB). Each database is accessed by the controller 51, as appropriate, when the controller 51 executes the server program. Details of each database will be described later by using examples.

The communication unit 53 is a communication interface for communicating with the store terminal 3, the user terminal 7, and the label printer 2.

The communication unit 53 is also a communication interface for communicating with the payment server (not shown). The payment server is able to communicate with the server 5 via the network NW and provides a service of making a payment for products of a user in the store on behalf of the user.

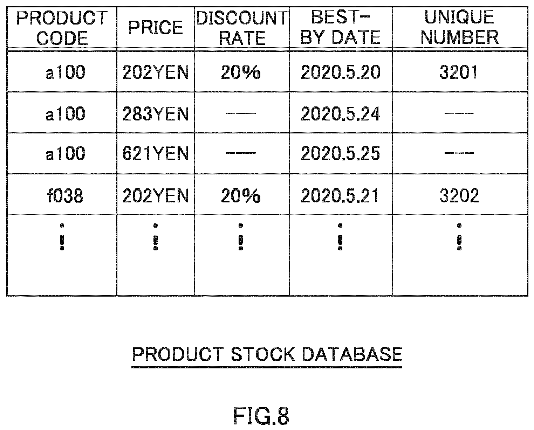

FIG. 8 shows an example of components of a product stock database.

Each record of the product stock database illustrated in FIG. 8 includes a value of each of these fields: "PRODUCT CODE," "PRICE," "DISCOUNT RATE," "BEST-BY DATE," and "UNIQUE NUMBER." The fields respectively correspond to a product code, price data, discount rate data, best-by date data, and a unique number, which are transmitted from, for example, the store terminal 3. The controller 51 of the server 5 creates a new record in the product stock database or updates the value in each field of an existing record, each time it receives data from, for example, the store terminal 3.

The controller 51 of the server 5 obtains print data from the label printer 2 and updates the product stock database based on the data contained in the print data. The controller 51 of the server 5 also obtains product data (described later) from the store terminal 3 and updates the product stock database based on the product data.

In addition, the controller 51 of the server 5 updates the product stock database based on a payment request, which is received from the user terminal 7.

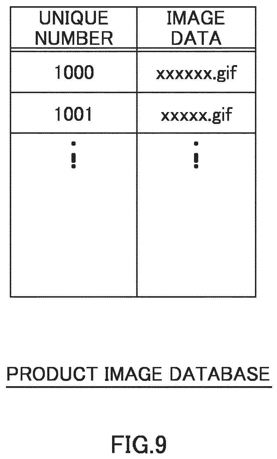

FIG. 9 shows an example of components of a product image database.

Each record of the product image database illustrated in FIG. 9 includes a value of each of fields of "UNIQUE NUMBER" and "IMAGE DATA." The format of the image data is not limited to GIF and may be other applicable format, such as JPEG or TIFF. The controller 51 identifies image data corresponding to, for example, a unique number assigned to an individual product, by referring to the product image database. In order to notify a user of when the product has had the condition shown in the image, it is preferable to provide a field such as "IMAGE CAPTURED DATE AND TIME" and contain a value showing the date and time when the corresponding image data has been obtained, in the database.

The controller 51 of the server 5 receives image data of a product, which is associated with, for example, a unique number, from the store terminal 3, and it updates the product image database.

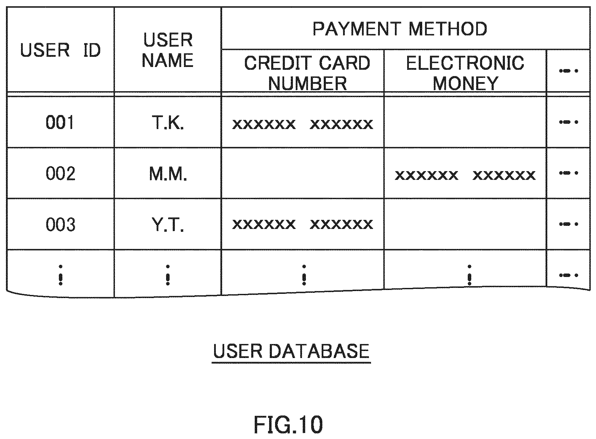

FIG. 10 shows an example of components of a user database.

Each record of the user database illustrated in FIG. 10 includes a value of each of these fields: "USER ID," "USER NAME," and "PAYMENT METHOD." Herein, the value in the "USER ID" field is identification information assigned to a user. The value in the "USER NAME" field is acquired based on input operation of a user and is recorded in the user database at the time the user starts using online sales. The value in the "PAYMENT METHOD" field is acquired based on input operation of a user and is recorded or updated in the user database at the time the user starts using online sales or at any time.

The value in the "PAYMENT METHOD" field is data necessary to receive a payment for products from a user, which is, for example, information of a credit card number and/or information related to electronic money (e.g., a prepaid number). The value in the "PAYMENT METHOD" field is provided to the payment server (not shown) when a user of a corresponding user ID makes a payment.

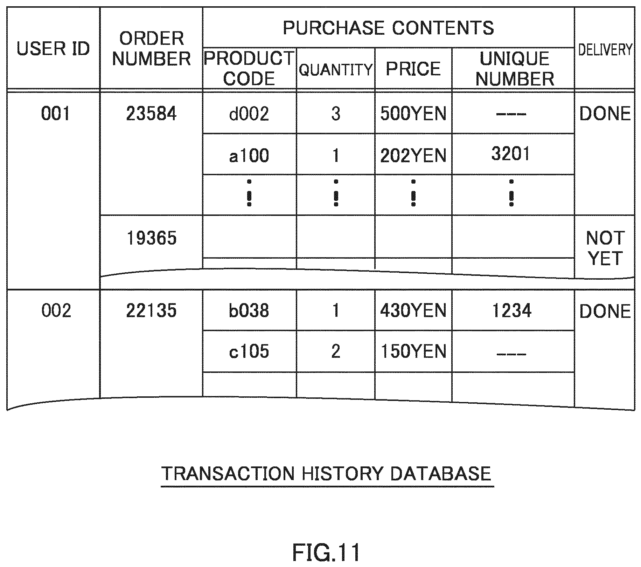

FIG. 11 shows an example of components of a transaction history database.

Each record of the transaction history database illustrated in FIG. 11 includes a value of each of these fields: "USER ID," "ORDER NUMBER," "PURCHASE CONTENTS," and "DELIVERY." Herein, the value in the "ORDER NUMBER" field is uniquely assigned to each payment of a user after the payment for products is completed.

The "PURCHASE CONTENTS" field includes subfields: "PRODUCT CODE," "QUANTITY," "PRICE," and "UNIQUE NUMBER." The value of each subfield shows data of details of purchase contents of a payment identified by a payment ID.

The value in the "DELIVERY" field shows whether a user has already received ("DONE") the products in which payment was completed, or not ("NOT YET"), in the store.

In the following description, data contained in one or a plurality of records identified by an order number in the transaction history database is called "purchase data."

The store has a POS system (not shown) that retrieves data from the transaction history database to aggregate data of sales paid online and data of sales paid in the store.

The controller 51 of the server 5 updates the transaction history database based on a payment request, which is received from the user terminal 7. In addition, the controller 51 of the server 5 updates the transaction history database based on a delivery completion notification (described later), which is received from the user terminal 3.

The controller 51 executes the server program to function as a payment processor. The payment processor performs a payment process of products based on a payment request of products corresponding to product codes, acquired from the user terminal 7.

In this embodiment, the controller 51 retrieves data of a user name and a payment method from the user database and provides the data to the payment server (not shown). In addition, the controller 51 creates a new record in the transaction history database upon receiving the payment request from the user terminal 7.

### (3) Operation of Online Sales System 1

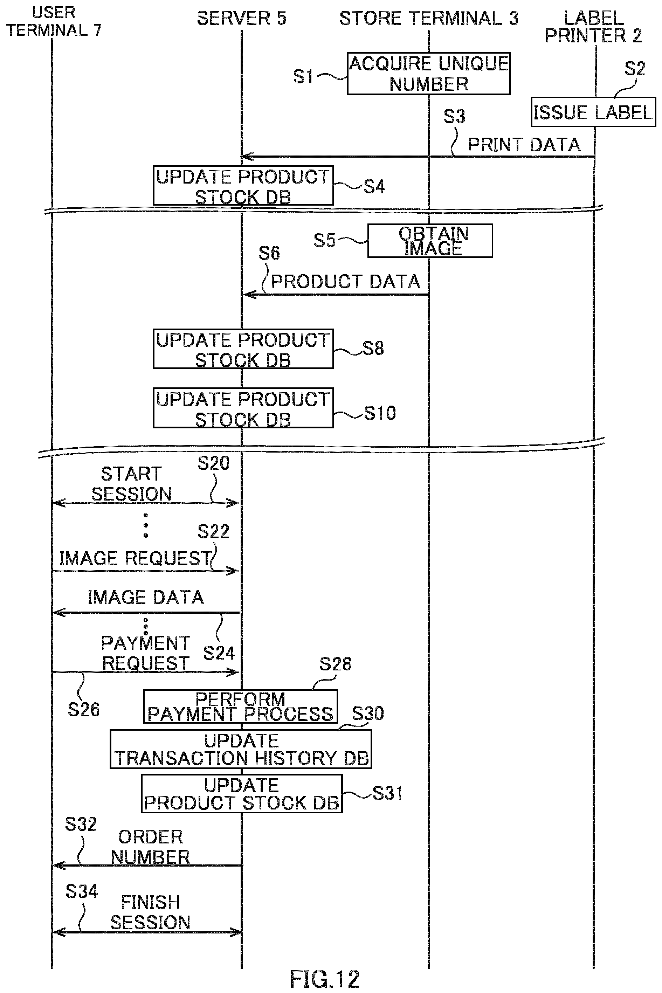

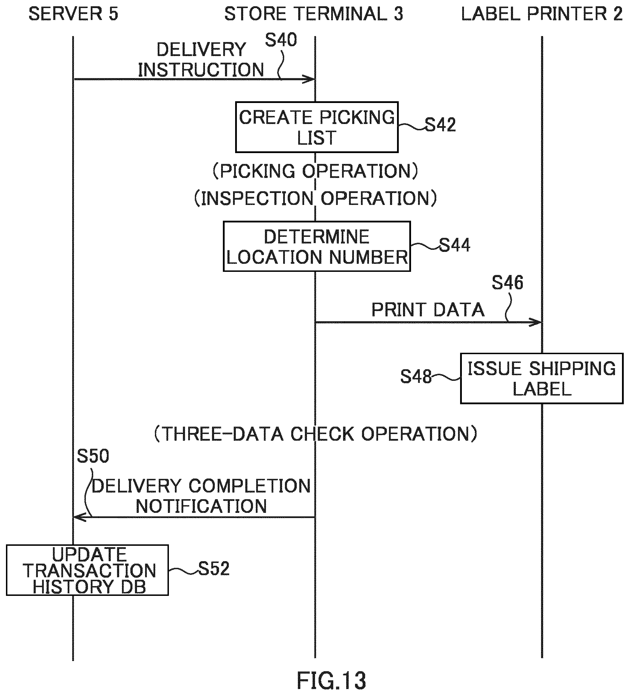

Next, operations of the online sales system 1 of this embodiment will be described with reference to FIGs. 12 and 13. FIG. 12 is a sequence chart showing an operation of the online sales system 1, which is performed until a user completes an online purchase of a price-reduction target product in a store. The price-reduction target product is a product whose price is reduced due to lapse of a predetermined time from manufacturing of the product, as shown in FIG. 2. It is preferable to affix, for example, a price-reduction seal 101, to a product label PL of a price-reduction target product, but the method of showing a price reduction is not limited thereto.

First, the store terminal 3 acquires a unique number for a product in response to a predetermined operation of a store staff at the time the product is manufactured (step S1). The unique number is a number for identifying each of a plurality of products (each of individual products) having the same product code, and thus, it is determined so as to not overlap a unique number that is already assigned to other individual product.

After the unique number for the product is acquired, the store staff performs a weighing operation or the like and inputs a product code, best-by date data, and the unique number acquired in step S1, as well as data such as a price per 100 gram and a net quantity (g), into the label printer 2. The label printer 2 creates print data based on the input data and issues a product label (step S2), and it then transmits the print data to the server 5 (step S3). The server 5 updates the product stock database based on data contained in the received print data (a product code, best-by date data, a unique number, and data such as a price per 100 gram and a net quantity (g), as described above) (step S4).

The product label, which is issued in step S2, contains code information, as illustrated in FIG. 2, and it is attached to the product.

A price-reduction seal or the like is affixed to the product, for example, by a store staff, when the time to reduce the price of the product comes. The store terminal 3 obtains image data of the price-reduction target product in response to a predetermined operation of the store staff (step S5). The store terminal 3 analyzes the code information of the product label in the image data, which is obtained in step S5, to extract the product code, the best-by date data, and the unique number of the product as well as performs image recognition to extract data such as the price and the discount rate of the product in the image data. The store terminal 3 transmits data (called "product data") in which the product code, the price data, the discount rate data, the best-by date data, the unique number, etc., of the price-reduction target product and the image data are associated with each other, to the server 5 (step S6). The image data of the price-reduction target product may be obtained at the time of reducing the price, by an imaging device such as a camera, which is set up in the store in advance.

The server 5 creates a record in which the unique number and the image data contained in the product data received from the store terminal 3 or an imaging device in the store, are associated with each other, to update the product image database (step S8). The server 5 also creates a record including the product code, the price data, the discount rate data, the best-by date data, and the unique number contained in the received product data, to update the product stock database (step S10).

A user who intends to use online sales operates the user terminal 7 and views web pages for online sales provided, for example, by the store.

Specifically, the web browser of the user terminal 7 starts a session for communicating with the server program of the server 5 by HTTP or the like (step S20). The web browser of the user terminal 7 transmits an image request for an image of a product selected by the user, to the server 5 (step S22), and it receives HTML documents and the like containing corresponding image data (step S24) and displays the image, as shown in, for example, the screens G1 and G2 in FIG. 5. In this state, in the case in which a plurality of price-reduction target products (a plurality of individual products) having the same product code are available for purchase, the user can select a price-reduction target product while checking each image.

After completing selection of all products to be purchased, the user performs a predetermined operation to cause the web browser of the user terminal 7 to transmit a payment request of the products to the server 5 (step S26).

The server 5 retrieves information of a payment method of the user from the user database and provides the information of the payment method and the information of the price to be paid, to the payment server (not shown), to perform a payment process (step S28). After the payment process has been smoothly finished, the server 5 updates the transaction history database (step S30). In more detail, the server 5 issues a new order number and creates one or a plurality of records containing purchase data corresponding to the payment process in step S28, in a manner associated with the issued order number, in the transaction history database. At this point of time, the value in the "DELIVERY" field is "NOT YET."

Then, the server 5 deletes the record of the product corresponding to the unique number among the products in which the payment has been completed, and it thereby updates the product stock database (step S31).

The server 5 transmits data of the order number, which is issued in step S30, to the user terminal 7 (step S32). Thereafter, the session that is started in step S20 is finished (step S34).

The web browser of the user terminal 7 displays an order number ON obtained in step S32 and code information C3 corresponding to the order number, as illustrated in the screen G4 in FIG. 5.

FIG. 13 is a sequence chart showing an operation of the online sales system 1, which is performed from the time the user has purchased the products online to the time the user receives them in the store.

After transmitting the data of the order number to the user terminal 7, the server 5 transmits a delivery instruction to the store terminal 3 (step S40). The delivery instruction is a message to instruct a store staff to prepare for delivering the products in the store corresponding to the order number. The delivery instruction includes, for example, an order number, quantity of each product corresponding to the order number, and a product code, best-by date data, and a unique number of each product.

Upon receiving the delivery instruction, the store terminal 3 creates a picking list based on the data contained in the delivery instruction (step S42). The picking list contains code information (encoded data of the product code, the best-by date data, and the unique number) corresponding to each of one or more products to be picked up, in a manner associated with the order number.

As shown in FIG. 3, the store staff successively picks up the products while checking the code information contained in the picking list against code information C1 of a product label PL attached to a product "P" by using the handy terminal 6, and the store staff puts all picked-up products in a container 10.

Then, the store terminal 3 determines a location number of the storage place in accordance with a predetermined operation of the store staff (step S44). Moreover, the store terminal 3 creates print data containing the location number and the code information corresponding to the order number and transmits the print data to the label printer 2 (step S46). The label printer 2 issues a label (e.g., a label L1 in FIG. 3) based on the received print data (step S48). The store staff attaches the label, which is issued by the label printer 2, to the container 10, whereby preparations for delivery of products to the user are completed.

Thereafter, the user comes to the store to receive the products, and the three-data check operation is performed. As described by referring to FIG. 4, the three-data check operation is performed by using the label printer 2 and the code reader 8 that are set up in the receiving place in the store.

Specifically, the user who comes to receive the products shows a screen that is displayed on the user terminal 7 (in the example in FIG. 4, a screen containing the order number ON and the code information C3 corresponding to the order number ON), to a store staff. The store staff reads (scans) the code information C3 by using the code reader 8, and in response to this, the label printer 2 issues a label L2 that is printed with code information C4 corresponding to the order number ON and with the location number.

The store staff goes for the container 10 for the user "U" and brings it back from the storage place in the store to the receiving place by referring to the location number shown on the label L2.

Then, the store staff uses the code reader 8 to successively read the code information C3, which is displayed on the user terminal 7, the code information C4, which is contained in the label L2 issued by the label printer 2, and the code information C2, which is contained in the label L1 attached to the container 10 brought back from the storage place. As a result, only when the three pieces of code information correspond to each other, the store staff hands the container 10 containing the one or more products, to the user (three-data check).

In case the user comes to receive the products after a best-by date of the product expires, it may be configured to be able to notify that a product having an expired best-by date is contained. In one example, the order number that is contained in the code information to be subjected to the three-data check, is referred to. Then, if the best-by date of one of the products corresponding to the order number has passed the current time, the label printer 2 displays a message to notify that a product having an expired best-by date is contained. In this case, the label printer 2 that is set up in the receiving place is configured to communicate with the store terminal 3 and checks whether a product having an expired best-by date is included, for example, by accessing the data contained in the delivery instruction.

When the store staff performs a predetermined operation after handing the container 10 to the user, the store terminal 3 transmits a delivery completion notification containing the order number, to the server 5 (step S50). Upon receiving the delivery completion notification, the server 5 updates the transaction history database by rewriting the value in the "DELIVERY" field corresponding to the order number contained in the delivery completion notification, from "NOT YET" to "DONE," in the transaction history database (step S52).

As described above, in the online sales system 1 of this embodiment, the server 5 records the database in which a product code, image data, and data of a price and a discount rate, of a price-reduction target product in a store are associated with each other, in the storage 52, in online sales of products. The user terminal 7 retrieves a product code, image data, and data such as of a price and a discount rate, of a price-reduction target product selected by a user, from the server 5, and it causes the display to show them.

That is, image data of a price-reduction target product is recorded in the database of the server 5, whereby it is possible to visually inform a user what kind of product a price-reduction target is, and moreover, what level the condition of the product is in, on an online screen. Thus, an environment close to a determination reference used when a user decides whether to purchase a price-reduction target product, is created online at a level similar to that in an actual store.

In the online sales system 1 of this embodiment, after a payment for the price-reduction target product is completed, the corresponding product is deleted from the product stock database. This enables a store staff to recognize the stock status of each price-reduction target product in real time by referring to the product stock database from the store terminal 3. Thus, it is possible for the store staff to update the discount rate of the price-reduction target product to a suitable value at any desired time before the best-by date. In this case, in consideration that a price-reduction target product such as a perishable food can vary in appearance before the best-by date, it is preferable to obtain image data and sequentially update the product image database of the server 5, for example, at the time the discount rate is updated. This process makes it possible to provide a user with an optimal price that reflects the quality level of the price-reduction target product, online.

Even in a case of not updating the discount rate, in order to accurately inform a purchaser of the current condition of a price-reduction target product (e.g., at the time of purchase) as in the case of an actual store, image data of the price-reduction target product may be obtained at times different from each other, and the product image database may be sequentially updated. Updating the image data is performed during a predetermined period from any time between the start time of manufacturing the product and the best-by date, to the best-by date.

In the online sales system 1 of this embodiment, not only data of sales paid online but also data of sales paid, such as at an ordinary checkout counter, at a self-checkout counter, and by scanning performed by a purchaser, in the store, is preferably reflected in the product stock database of the server 5. In the online sales system 1, when a product label is issued, print data is transmitted from the label printer 2 to the server 5, and the product stock database is updated. That is, the data at the time of issuing a product label corresponds to product storing information of the store. On the other hand, data of sales paid online, and data of sales paid, such as at an ordinary checkout counter, at a self-checkout counter, and by scanning performed by a purchaser, in the store, correspond to product delivered information. In short, the product storing information and the product delivered information are reflected in the product stock database. Thus, product stocks in the store are visually shown by the product stock database, whereby it is possible to establish a system for enabling a store staff to recognize appropriate stocks in accordance with best-by dates. With this system, the time to reduce the price of a product can be more appropriately set, and an appropriate discount rate can be set to a product.

In one example, when the state of having a lot of unsold products with the same product code and with a close best-by date is known from the product stock database, price reduction of the products can be actively performed also in online sales.

In the online sales system 1 of this embodiment, a price-reduction seal is preferably affixed to a price-reduction target product, as illustrated in FIG. 2. This helps a user to know that the product is reduced in price.

A material to be affixed to a product is not limited to a seal, and for example, a label that can be attached by a simple labeling device, such as a hand labeler, may be used.

In the online sales system 1 of this embodiment, the code information that is printed on the product label contains best-by date data, and thus, best-by date data can be contained in the product stock database in association with the product code. Thus, it is possible to determine a price (or discount rate) of each product in consideration of the stock statuses and the best-by dates of the products. On the other hand, a user of online sales can purchase a product while recognizing the best-by date and an image of an actual product, and therefore, user's uncertainty about online purchase of a price-reduction target product is solved.

The system that is provided by the online sales system 1 of this embodiment enables online sales of price-reduction target products having close best-by dates. Thus, amid expectations of further increase in online sales in the future, consumers who consider online shopping as being expensive can be drawn to online sales.

In addition, online sales of price-reduction target products is promoted, resulting in a contribution to reduction in food loss of, for example, perishable foods.

The online sales system 1 of this embodiment is applicable to online sales that provides a pick-up-in-store service, which is presumed to increase in the future. In the case of employing the online sales system 1 of this embodiment in online sales that provides a pick-up-in-store service, for example, it is possible to make a payment for a price-reduction target product, online, during daytime, and to receive it at the store in the evening, which system can create new demand.

### (4) Modification Examples of Embodiment

Next, an online sales system of each of modification examples of the embodiment will be described.

### (4-1) First Modification Example

Although the foregoing embodiment is described by using a case in which a unique number is contained in the code information included in the product label attached to a product, the method of showing the unique number is not limited thereto. The unique number is shown on a product or a product label irrespective of the form of the unique number.

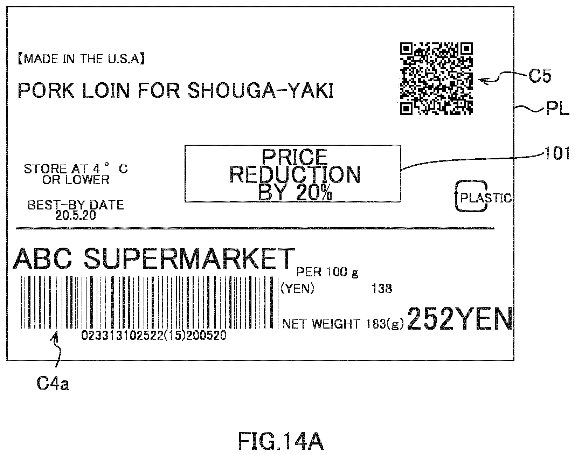

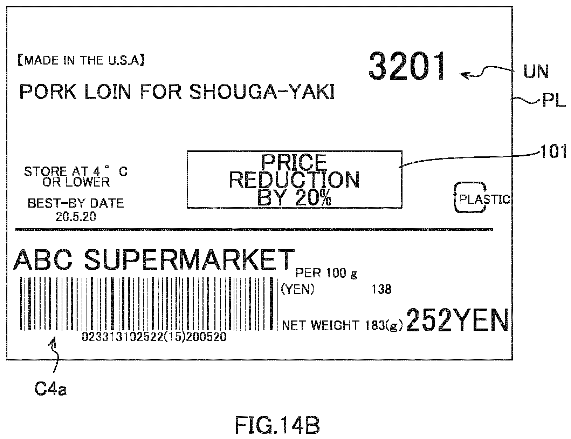

FIG. 14A shows an example of showing code information C5 corresponding to a unique number, on a product label PL. FIG. 14B shows an example of showing a character string corresponding to a unique number UN, on a product label PL. In each example, code information C4a differs from the code information C1 (refer to FIG. 2), and it contains a product code and best-by date data but does not contain a unique number.

In the case in FIG. 14A, the code information C5 corresponding to the unique number may be printed on the product label PL, or another label that is printed with the code information C5 may be affixed to the product label PL. In the case in FIG. 14B, the character string corresponding to the unique number UN may be printed on the product label PL or may be hand written by a store staff.

In the case in FIG. 14B, the store terminal 3 can obtain the unique number from image data of a product by character recognition. In addition, in the condition in which the character string of a unique number is shown in the picking list, a store staff can perform a picking operation by picking up a product showing a unique number that agrees with the unique number shown in the picking list.

### (4-2) Second Modification Example

Although the foregoing embodiment is described by using a method of identifying each product by assigning a unique number (an example of individual identification information) to each of a plurality of products having the same product code, the individual identification information of each product may not be a unique number and may be feature data that is extracted from image data corresponding to each product.

The feature data that is extracted from image data is not limited, but for example, the feature data may be information for determining a label position of a product label attached to a product (e.g., coordinates of four corners of the label), while assuming that a reference position (e.g., one of four corners) of the product (or a package of the product) is used as an origin in image data. A plurality of pieces of the information for determining a label position are presumed to hardly perfectly agree with each other among a plurality of products, and therefore, such feature data can be used as identification information for identifying an individual product.

Alternatively, a plurality of pieces of information of character strings contained in a product label (in the example in FIG. 2, information of a net quantity and a best-by date) in image data are unlikely to completely agree with each other among a plurality of individual products, and in view of this, information of such character strings may be used as the feature data, or characters, marks, or the like written by a store staff may be recognized and be used as the feature data. In addition, the feature data may be a combination of information of such characters or the like, and information from a product package, such as color of a product, or a position of a product or a label.

The feature data that is extracted from image data may be associated with a unique number. In this case, a unique number corresponding to the feature data is assigned to an individual product that corresponds to a record in the product stock database, so as to not overlap that of other individual product. The assigned unique number and the corresponding feature data are preferably registered in the product image database.

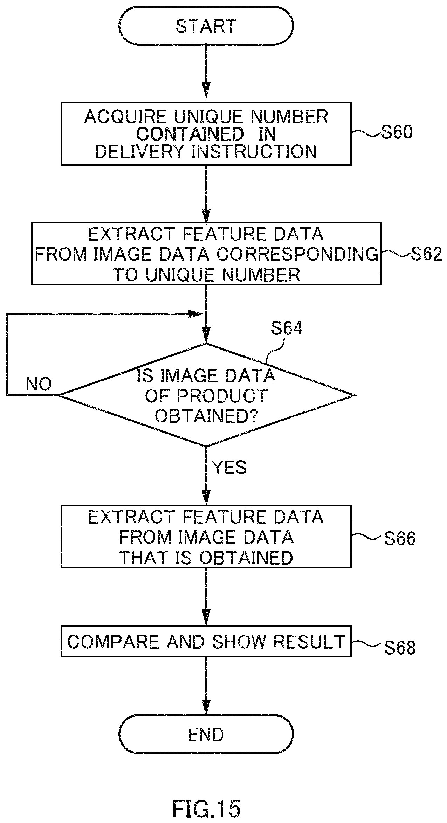

FIG. 15 is a flowchart that is executed by the store terminal 3, in the online sales system related to this modification example. More specifically, FIG. 15 shows a flowchart that is executed by the store terminal 3 when a store staff picks up products in the store in a picking operation by referring to feature data extracted from image data of the products.

The delivery instruction that is transmitted from the server 5 to the store terminal 3 after the payment for products is completed (step S40 in FIG. 13), contains a unique number of a price-reduction target product. Herein, it is assumed that the store terminal 3 stores the image data, which is obtained in step S4 in FIG. 12, in association with the unique number, in the storage 32. Upon receiving the unique number contained in the delivery instruction (step S60), the store terminal 3 retrieves the image data corresponding to the unique number from the storage 32 and extracts feature data from the image data (step S62).

Next, when the store staff finds a product to be picked up among products in the store, the store terminal 3 obtains image data of the product in the store (step S64: YES) and extracts feature data from the obtained image data in the same manner as in step S62 (step S66). Thereafter, the store terminal 3 checks the feature data extracted in step S62 against the feature data extracted in step S66 and shows the check result (step S68). In the state in which the check result is acceptable, the product, from which the image data is obtained in step S64, is picked up. In the state in which the check result is unacceptable, image data of other product in the store is obtained, and steps S66 and S68 are repeated.

In this manner, the store terminal 3 compares the feature data of two images with each other, whereby a correct product can be picked up from the store. The image data may be associated with information other than the unique number. The image data may be stored in association with an order number, and a product may be picked up by referring to feature data of the image data corresponding to the order number.

### (4-3) Third Modification Example

Although a user has already made an online payment for a price-reduction target product, a consumer in the store may put it in a basket or may purchase it before a store staff picks it up.

In this case, the store terminal 3 transmits a notification that it becomes impossible to deliver a price-reduction target product corresponding to a certain order number, to the server 5. In response to this notice, the server 5 preferably offers a plurality of alternative plans that can be employed by the user, to the user terminal 7. The plurality of alternative plans may include choices such as (i) a product alternative to the price-reduction target product that has been already paid is not necessary, and (ii) if there is the same product being more expensive than the price-reduction target product that has been already paid, this product is purchased. Irrespective of which alternative plan is selected, the payment for the price-reduction target product that has already been made is canceled, and a payment for other product is made, as necessary.

The possibility that a product may be purchased in the store prior to online purchase of a user, may be notified to the user who uses online sales, beforehand. In the case in which the user accepts this, the procedure described below may be conducted. Specifically, the web application is configured to make a user prioritize choices that are taken in the case in which a product has been already purchased prior to online purchase of the user. The choices may include: (i) other product having the same product code as a target product is not purchased; (ii) the same product having the same product code as a target product is purchased even if it is more expensive; (iii) an offer of the same product having the same product code as a target product but having a close best-by date is accepted; and (iv) an offer of a product being similar to a target product but having a different product code is accepted. In the case in which the user selects the choices (ii) to (iv), it is preferable to display product information and image data corresponding to the choices (ii) to (iv) to make the user select the order of purchase and to register the selected order as a list for showing the order of purchase in the situation in which a product has been already purchased. In the state in which the choice (iv) is included, similar product codes are associated with each other in the server 5. In the situation in which a product selected by the user has been already purchased in the store, the server 5 performs processes in accordance with the priority order (including the list for showing the order of purchase) that is preliminarily set for the user, and as necessary, it performs a payment process and other process for an alternative product.

### (4-4) Fourth Modification Example

Next, a fourth modification example will be described.

Although each of the foregoing embodiments is described by using a case of reading code information of a product as a method of obtaining a product code, best-by date data, and a unique number from the product, the obtaining method is not limited thereto.

Other method of obtaining a product code, best-by date data, and a unique number from a product involves receiving a product code, best-by date data, and a unique number from a radio tag that is attached to a product, a shelf label, or a packaging material of a product, a radio tag disposed close to a product, or the like. In this case, any communication method (e.g., a communication protocol and a frequency to be used) can be used in receiving information. Examples of the communication method include radio frequency identification (RFID), such as near field communication (NFC), and Bluetooth (registered trademark).

It is assumed that an NFC tag that registers a product code, best-by date data, and a unique number of a product is attached to, for example, the product or a shelf label, and an NFC reader is mounted on the store terminal 3. Under these conditions, in response to a store staff bringing the store terminal 3 close to the product, the NFC reader of the store terminal 3 receives the product code, the best-by date data, and the unique number of the product from the NFC tag of the product.

In the embodiment described above, at least one of the functions of the server 5 may be implemented by software of the user terminal 7, and at least one of the functions of the user terminal 7 may be implemented by software of the server 5. In addition, each of the functions of the user terminal 7 and each of the functions of the server 5 may be implemented by allocating them to the user terminal 7 and the server 5, as necessary.

The same can be performed among the server 5, the store terminal 3, and the user terminal 7.

Although the foregoing embodiment is described by using a case in which best-by date data of a product is contained in code information printed on a product label and the best-by date data is stored in association with a product code in the product stock database of the server 5, the best-by date data may not be stored in this manner. A user can recognize a best-by date from a product label contained in a product image, and thus, the store terminal 3 does not necessarily obtain best-by date data, and the server 5 does not necessarily manage it.

Although the foregoing embodiment is described by using a case of associating a unique number with an individual product as individual identification information, the individual identification information may not be used. Specifically, for products having the same product code and the same best-by date but having mutually different conditions, such as perishable foods, associating individual identification information with products is effective for a user to select an individual product. However, for products having the same product code and having approximately the same tendency to deteriorate before, for example, a use-by date, such as industrial products, enabling distinguishing products from each other is not necessarily performed, from the point of view of a user selecting a product.

Although image data of a product is described as an example of the condition information of a product in the foregoing embodiment, the condition information may include information showing the condition of a product, which is estimated from a result of analyzing a product image. For example, information such as color or a grade of a product that is estimated from a result of analyzing a product image is useful information for a user to estimate the quality of the product even without the product image. Thus, the information showing the condition of a product, which is estimated from a result of analyzing a product image, is also information effective for a user to decide whether to make an online purchase of a price-reduction target product.

The condition information may include control information showing a controlled state while a product is preserved. For example, control information may be information indicating a controlled state, such as how many days have passed after a product is manufactured, environment (location, temperature, humidity, etc.) in which the product is preserved during those days, or image data that are obtained multiple times as time elapses. Such control information is useful information for a user to estimate the quality of the product. Thus, such control information is also information effective for a user to decide whether to make an online purchase of a price-reduction target product. In one example, it is preferable that a store staff sequentially inputs control information to the store terminal 3 and that the input control information is uploaded to the server 5 and is stored in the database. In this case, the control information is preferably transmitted to the server 5 while being associated with a unique number of an individual product.

Although best-by date information is described as an example of expiration information in the foregoing embodiment, the "expiration information" of a product is information related to an expiration date that shows a reference whether a user can use, eat, or consume the product. Examples of the expiration date include a use-by date, a best-by date, a consume-by date, and a sell-by date.

Although the server 5 is described as an example of the information processing device in the foregoing embodiment, the information processing device may be a computer device having a communication function or may be composed of a plurality of devices, such as a combination of a web server and a database server.

## Claims

1. An information processing system (1) comprising:
a user terminal (7) configured to be carried by a user; and
an information processing device (5) being configured to communicate with the user terminal (7),
the information processing device (5) comprising:
a storage (52) configured to store product information of a product to be reduced in price in a store, condition information showing a condition of the product, and offered price information of the product, in association with one another; and
a processor (51);
wherein the user terminal (7) comprises a processor (71) configured to acquire the condition information and the offered price information corresponding to the product information of the product selected by the user, from the information processing device (5), and to cause a display (74) of the user terminal (7) to show the acquired condition information and the offered price information;
**characterized in that**
the processor (51) of the information processing device (5) is configured to:
control to obtain from the storage (52) and cause the display (74) of the user terminal (7) to show product information of one or a plurality of products corresponding to a type of a product selected by the user terminal and offered price information of the product that have been obtained,
perform a payment process of the product based on a payment request of the product corresponding to the product information acquired from the user terminal (7),
record, as the condition information, a product image being obtained at a time point the product to be reduced in price becomes a price-reduction target, in association with identification information for identifying a product,
update the product image recorded in association with the identification information when the product image is obtained at each of times, the times including a time when a discount rate is updated after the product to be reduced in price has become a price-reduction target and a time when a discount rate is not updated, and
upon receiving a browsing request from the user terminal (7), cause the display (74) of the user terminal (7) to show, as the condition information, a product image corresponding to identification information of a product for the browsing request.

2. The information processing system (1) according to claim 1, wherein the product information is associated with expiration information related to an expiration date of the product, and the processor (71) of the user terminal (7) is configured to cause the display (74) to show the expiration information of the product selected by the user, together with the condition information.

3. The information processing system (1) according to claim 1 or 2, wherein the storage (52) of the information processing device (5) is configured to store individual identification information of the product in association with the condition information,
the processor (71) of the user terminal (7) is configured to acquire condition information corresponding to the individual identification information of the product selected by the user, from the information processing device (5), and to cause the display (74) to show the acquired condition information, and
the processor (51) of the information processing device (5) is configured to perform the payment process of the product based on a payment request of the product corresponding to the individual identification information acquired from the user terminal (7).

4. The information processing system (1) according to claim 3, further comprising a printer (2) configured to print the individual identification information on a print medium to be attached to a product corresponding to the individual identification information.

5. The information processing system (1) according to claim 4, wherein the printer (2) is configured to print code information that contains the individual identification information, on the print medium.

6. The information processing system (1) according to any one of claims 1 to 5, wherein the condition information of the product stored in the storage (52) of the information processing device (5) is updated at least once during a predetermined period.

7. The information processing system (1) according to any one of claims 1 to 6, wherein the condition information includes information indicating a condition of the product, which is estimated from a result of analyzing an image of the product.

8. The information processing system (1) according to any one of claims 1 to 6, wherein the condition information includes control information indicating a controlled state while the product is preserved.

9. The information processing system (1) according to claim 1 or 2, further comprising a store terminal (3) that is able to communicate with the information processing device (5),
the condition information including image information of the product,
the individual identification information being feature information that is extracted from image information associated with the individual identification information,
the store terminal (3) configured to check feature information that is extracted from image information of a product for which a payment process has been performed by the information processing device (5), against feature information that is extracted from image information of a product in the store.

10. An information processing method that is performed between a user terminal (7) configured to be carried by a user and an information processing device (5) being able to communicate with the user terminal (7), the method comprising:
recording, by the information processing device (5), product information of a product to be reduced in price in a store, condition information showing a condition of the product, and offered price information of the product, in association with one another,
acquiring, by the user terminal (7), the condition information and the offered price information of one or a plurality of products, corresponding to a type of a product selected by the user, from the information processing device (5),
displaying, by the user terminal (7), the acquired condition information and the offered price information,
performing, by the information processing device (5), a payment process of the product based on a payment request of the product corresponding to the product information acquired from the user terminal (7),
recording, by the information processing device (5), as the condition information, a product image being obtained at a time point the product to be reduced in price becomes a price-reduction target, in association with identification information for identifying a product,
updating, by the information processing device (5), the product image recorded in association with the identification information when the product image is obtained at each of times, the times including a time when a discount rate is updated after the product to be reduced in price has become a price-reduction target and a time when a discount rate is not updated, and
upon receiving a browsing request from the user terminal (7), causing, by the information processing device (5), the display (74) of the user terminal (7) to show, as the condition information, a product image corresponding to identification information of a product for the browsing request.

11. A program configured to cause a computer to execute a predetermined method in a server (5) being able to communicate with a user terminal (7) that is configured to be carried by a user,
the method comprising:
recording product information of a product to be reduced in price in a store, condition information showing a condition of the product, and offered price information of the product, in association with one another;
providing the user terminal (7) with the condition information and the offered price information of one or a plurality of products, corresponding to a type of a product selected by the user;
performing a payment process of the product based on a payment request of the product corresponding to the product information acquired from the user terminal (7),
recording, as the condition information, a product image being obtained at a time point the product to be reduced in price becomes a price-reduction target, in association with identification information for identifying a product,
updating the product image recorded in association with the identification information when the product image is obtained at each of times, the times including a time when a discount rate is updated after the product to be reduced in price has become a price-reduction target and a time when a discount rate is not updated, and
upon receiving a browsing request from the user terminal (7), causing the display (74) of the user terminal (7) to show, as the condition information, a product image corresponding to identification information of a product for the browsing request.

## Patentansprüche

1. Informationsverarbeitungssystem (1), umfassend:
ein Benutzerendgerät (7), das eingerichtet ist, von einem Benutzer mitgeführt zu werden; und
eine Informationsverarbeitungsvorrichtung (5), die eingerichtet ist, mit dem Benutzerendgerät (7) zu kommunizieren,
wobei die Informationsverarbeitungsvorrichtung (5) umfasst:
einen Speicher (52), der eingerichtet ist, Produktinformationen eines Produkts, dessen Preis in einem Geschäft reduziert werden soll, Zustandsinformationen, die einen Zustand des Produkts angeben, und Angebotspreisinformationen des Produkts in Zuordnung zueinander zu speichern; und
einen Prozessor (51);
wobei das Benutzerendgerät (7) einen Prozessor (71) umfasst, der eingerichtet ist, die Zustandsinformationen und die Angebotspreisinformationen entsprechend den Produktinformationen des vom Benutzer ausgewählten Produkts von der Informationsverarbeitungsvorrichtung (5) zu erfassen und eine Anzeige (74) des Benutzerendgeräts (7) zu veranlassen, die erfassten Zustandsinformationen und die Angebotspreisinformationen anzuzeigen;
**dadurch gekennzeichnet, dass**
der Prozessor (51) der Informationsverarbeitungsvorrichtung (5) eingerichtet ist, um:
das Abrufen von Produktinformationen eines oder einer Vielzahl von Produkten, die einem durch das Benutzerendgerät ausgewählten Produkttyp entsprechen, aus dem Speicher (52) zu steuern und die Anzeige (74) des Benutzerendgeräts (7) zu veranlassen, die abgerufenen Produktinformationen und Angebotspreisinformationen des Produkts anzuzeigen,
einen Zahlungsvorgang des Produkts auf Grundlage einer Zahlungsanforderung des Produkts entsprechend den von dem Benutzerendgerät (7) erfassten Produktinformationen durchzuführen,
als die Zustandsinformationen ein Produktbild, das zu einem Zeitpunkt erhalten wird, zu dem das Produkt, dessen Preis reduziert werden soll, zu einem Ziel einer Preisreduzierung wird, in Zuordnung zu Identifikationsinformationen zum Identifizieren eines Produkts zu speichern,
das in Zuordnung zu den Identifikationsinformationen gespeicherte Produktbild zu aktualisieren, wenn das Produktbild zu jedem von Zeitpunkten erhalten wird, wobei die Zeitpunkte einen Zeitpunkt, zu dem ein Rabattsatz aktualisiert wird, nachdem das Produkt, dessen Preis reduziert werden soll, zu einem Ziel einer Preisreduzierung geworden ist, und einen Zeitpunkt, zu dem ein Rabattsatz nicht aktualisiert wird, umfassen, und
bei Empfang einer Abrufanforderung von dem Benutzerendgerät (7) die Anzeige (74) des Benutzerendgeräts (7) zu veranlassen, als die Zustandsinformationen ein Produktbild anzuzeigen, das Identifikationsinformationen eines Produkts für die Abrufanforderung entspricht.

2. Informationsverarbeitungssystem (1) nach Anspruch 1, wobei die Produktinformationen mit Informationen zum Verfallsdatum, die sich auf ein Verfallsdatum des Produkts beziehen, verknüpft sind und der Prozessor (71) des Benutzerendgeräts (7) eingerichtet ist, die Anzeige (74) zu veranlassen, die Informationen zum Verfallsdatum des vom Benutzer ausgewählten Produkts zusammen mit den Zustandsinformationen anzuzeigen.

3. Informationsverarbeitungssystem (1) nach Anspruch 1 oder 2, wobei der Speicher (52) der Informationsverarbeitungsvorrichtung (5) eingerichtet ist, individuelle Identifikationsinformationen des Produkts in Zuordnung zu den Zustandsinformationen zu speichern,
der Prozessor (71) des Benutzerendgeräts (7) eingerichtet ist, Zustandsinformationen entsprechend den individuellen Identifikationsinformationen des vom Benutzer ausgewählten Produkts von der Informationsverarbeitungsvorrichtung (5) zu erfassen und die Anzeige (74) zu veranlassen, die erfassten Zustandsinformationen anzuzeigen, und
der Prozessor (51) der Informationsverarbeitungsvorrichtung (5) eingerichtet ist, den Zahlungsvorgang des Produkts auf Grundlage einer Zahlungsanforderung des Produkts entsprechend den von dem Benutzerendgerät (7) erfassten individuellen Identifikationsinformationen durchzuführen.

4. Informationsverarbeitungssystem (1) nach Anspruch 3, ferner umfassend einen Drucker (2), der eingerichtet ist, die individuellen Identifikationsinformationen auf ein Druckmedium zu drucken, das an einem Produkt angebracht werden soll, das den individuellen Identifikationsinformationen entspricht.

5. Informationsverarbeitungssystem (1) nach Anspruch 4, wobei der Drucker (2) eingerichtet ist, Codeinformationen, die die individuellen Identifikationsinformationen enthalten, auf das Druckmedium zu drucken.

6. Informationsverarbeitungssystem (1) nach einem der Ansprüche 1 bis 5, wobei die Zustandsinformationen des Produkts, die in dem Speicher (52) der Informationsverarbeitungsvorrichtung (5) gespeichert sind, während eines vorgegebenen Zeitraums wenigstens einmal aktualisiert werden.

7. Informationsverarbeitungssystem (1) nach einem der Ansprüche 1 bis 6, wobei die Zustandsinformationen Informationen umfassen, die einen Zustand des Produkts angeben, der aus einem Ergebnis einer Analyse eines Bildes des Produkts geschätzt wird.

8. Informationsverarbeitungssystem (1) nach einem der Ansprüche 1 bis 6, wobei die Zustandsinformationen Kontrollinformationen umfassen, die einen kontrollierten Zustand angeben, während das Produkt aufbewahrt wird.

9. Informationsverarbeitungssystem (1) nach Anspruch 1 oder 2, ferner umfassend ein Geschäftsterminal (3), das mit der Informationsverarbeitungsvorrichtung (5) kommunizieren kann,
wobei die Zustandsinformationen Bildinformationen des Produkts umfassen,
wobei die individuellen Identifikationsinformationen Merkmalsinformationen sind, die aus Bildinformationen extrahiert werden, die mit den individuellen Identifikationsinformationen verknüpft sind,
wobei das Geschäftsterminal (3) eingerichtet ist, Merkmalsinformationen, die aus Bildinformationen eines Produkts extrahiert werden, für das ein Zahlungsvorgang durch die Informationsverarbeitungsvorrichtung (5) durchgeführt worden ist, mit Merkmalsinformationen abzugleichen, die aus Bildinformationen eines Produkts in dem Geschäft extrahiert werden.

10. Informationsverarbeitungsverfahren, das zwischen einem Benutzerendgerät (7), das eingerichtet ist, von einem Benutzer mitgeführt zu werden, und einer Informationsverarbeitungsvorrichtung (5), die mit dem Benutzerendgerät (7) kommunizieren kann, durchgeführt wird, wobei das Verfahren umfasst:
Speichern, durch die Informationsverarbeitungsvorrichtung (5), von Produktinformationen eines Produkts, dessen Preis in einem Geschäft reduziert werden soll, von Zustandsinformationen, die einen Zustand des Produkts angeben, und von Angebotspreisinformationen des Produkts in Zuordnung zueinander,
Erfassen, durch das Benutzerendgerät (7), der Zustandsinformationen und der Angebotspreisinformationen eines oder einer Vielzahl von Produkten, die einem vom Benutzer ausgewählten Produkttyp entsprechen, von der Informationsverarbeitungsvorrichtung (5),
Anzeigen, durch das Benutzerendgerät (7), der erfassten Zustandsinformationen und der Angebotspreisinformationen,
Durchführen, durch die Informationsverarbeitungsvorrichtung (5), eines Zahlungsvorgangs des Produkts auf Grundlage einer Zahlungsanforderung des Produkts entsprechend den von dem Benutzerendgerät (7) erfassten Produktinformationen,
Speichern, durch die Informationsverarbeitungsvorrichtung (5), als die Zustandsinformationen, eines Produktbildes, das zu einem Zeitpunkt erhalten wird, zu dem das Produkt, dessen Preis reduziert werden soll, zu einem Ziel einer Preisreduzierung wird, in Zuordnung zu Identifikationsinformationen zum Identifizieren eines Produkts,
Aktualisieren, durch die Informationsverarbeitungsvorrichtung (5), des in Zuordnung zu den Identifikationsinformationen gespeicherten Produktbildes, wenn das Produktbild zu jedem von Zeitpunkten erhalten wird, wobei die Zeitpunkte einen Zeitpunkt, zu dem ein Rabattsatz aktualisiert wird, nachdem das Produkt, dessen Preis reduziert werden soll, zu einem Ziel einer Preisreduzierung geworden ist, und einen Zeitpunkt, zu dem ein Rabattsatz nicht aktualisiert wird, umfassen, und
bei Empfang einer Abrufanforderung von dem Benutzerendgerät (7), Veranlassen, durch die Informationsverarbeitungsvorrichtung (5), der Anzeige (74) des Benutzerendgeräts (7), als die Zustandsinformationen ein Produktbild anzuzeigen, das Identifikationsinformationen eines Produkts für die Abrufanforderung entspricht.

11. Programm, das eingerichtet ist, einen Computer zu veranlassen, ein vorgegebenes Verfahren in einem Server (5) auszuführen, der mit einem Benutzerendgerät (7) kommunizieren kann, das eingerichtet ist, von einem Benutzer mitgeführt zu werden,
wobei das Verfahren umfasst:
Speichern von Produktinformationen eines Produkts, dessen Preis in einem Geschäft reduziert werden soll, von Zustandsinformationen, die einen Zustand des Produkts angeben, und von Angebotspreisinformationen des Produkts in Zuordnung zueinander;
Bereitstellen der Zustandsinformationen und der Angebotspreisinformationen eines oder einer Vielzahl von Produkten, die einem vom Benutzer ausgewählten Produkttyp entsprechen, für das Benutzerendgerät (7);
Durchführen eines Zahlungsvorgangs des Produkts auf Grundlage einer Zahlungsanforderung des Produkts entsprechend den von dem Benutzerendgerät (7) erfassten Produktinformationen,
Speichern, als die Zustandsinformationen, eines Produktbildes, das zu einem Zeitpunkt erhalten wird, zu dem das Produkt, dessen Preis reduziert werden soll, zu einem Ziel einer Preisreduzierung wird, in Zuordnung zu Identifikationsinformationen zum Identifizieren eines Produkts,
Aktualisieren des in Zuordnung zu den Identifikationsinformationen gespeicherten Produktbildes, wenn das Produktbild zu jedem von Zeitpunkten erhalten wird, wobei die Zeitpunkte einen Zeitpunkt, zu dem ein Rabattsatz aktualisiert wird, nachdem das Produkt, dessen Preis reduziert werden soll, zu einem Ziel einer Preisreduzierung geworden ist, und einen Zeitpunkt, zu dem ein Rabattsatz nicht aktualisiert wird, umfassen, und
bei Empfang einer Abrufanforderung von dem Benutzerendgerät (7), Veranlassen der Anzeige (74) des Benutzerendgeräts (7), als die Zustandsinformationen ein Produktbild anzuzeigen, das Identifikationsinformationen eines Produkts für die Abrufanforderung entspricht.

## Revendications

1. Système de traitement d'informations (1) comprenant :
un terminal utilisateur (7) configuré pour être transporté par un utilisateur ; et
un dispositif de traitement d'informations (5) configuré pour communiquer avec le terminal utilisateur (7),
le dispositif de traitement d'informations (5) comprenant :
une mémoire (52) configurée pour stocker des informations de produit d'un produit dont le prix doit être réduit dans un magasin, des informations sur l'état indiquant un état du produit et des informations relatives au prix proposé du produit, en association les unes avec les autres ; et
un processeur (51) ;
dans lequel le terminal utilisateur (7) comprend un processeur (71) configuré pour acquérir, à partir du dispositif de traitement d'informations (5), les informations sur l'état et les informations relatives au prix proposé correspondant aux informations de produit du produit sélectionné par l'utilisateur, et pour amener un afficheur (74) du terminal utilisateur (7) à afficher les informations sur l'état acquises et les informations relatives au prix proposé ;
**caractérisé en ce que**
le processeur (51) du dispositif de traitement d'informations (5) est configuré pour :
commander l'obtention, à partir de la mémoire (52), et amener l'afficheur (74) du terminal utilisateur (7) à afficher des informations de produit d'un ou d'une pluralité de produits correspondant à un type de produit sélectionné par le terminal utilisateur et des informations relatives au prix proposé du produit qui ont été obtenues,
effectuer un processus de paiement du produit sur la base d'une demande de paiement du produit correspondant aux informations de produit acquises à partir du terminal utilisateur (7),
enregistrer, en tant qu'informations sur l'état, une image du produit obtenue à un instant où le produit dont le prix doit être réduit devient une cible d'une réduction de prix, en association avec des informations d'identification permettant d'identifier un produit,
mettre à jour l'image du produit enregistrée en association avec les informations d'identification lorsque l'image du produit est obtenue à chacun d'instants, les instants comprenant un instant auquel un taux de remise est mis à jour après que le produit dont le prix doit être réduit est devenu une cible d'une réduction de prix et un instant auquel un taux de remise n'est pas mis à jour, et
à la réception d'une demande de consultation provenant du terminal utilisateur (7), amener l'afficheur (74) du terminal utilisateur (7) à afficher, en tant qu'informations sur l'état, une image de produit correspondant à des informations d'identification d'un produit pour la demande de consultation.

2. Système de traitement d'informations (1) selon la revendication 1, dans lequel les informations de produit sont associées à des informations relatives à la date de péremption se rapportant à une date de péremption du produit, et le processeur (71) du terminal utilisateur (7) est configuré pour amener l'afficheur (74) à afficher les informations relatives à la date de péremption du produit sélectionné par l'utilisateur, conjointement avec les informations sur l'état.

3. Système de traitement d'informations (1) selon la revendication 1 ou 2, dans lequel la mémoire (52) du dispositif de traitement d'informations (5) est configurée pour stocker des informations d'identification individuelle du produit en association avec les informations sur l'état,
le processeur (71) du terminal utilisateur (7) est configuré pour acquérir, à partir du dispositif de traitement d'informations (5), des informations sur l'état correspondant aux informations d'identification individuelle du produit sélectionné par l'utilisateur, et pour amener l'afficheur (74) à afficher les informations sur l'état acquises, et
le processeur (51) du dispositif de traitement d'informations (5) est configuré pour effectuer le processus de paiement du produit sur la base d'une demande de paiement du produit correspondant aux informations d'identification individuelle acquises à partir du terminal utilisateur (7).

4. Système de traitement d'informations (1) selon la revendication 3, comprenant en outre une imprimante (2) configurée pour imprimer les informations d'identification individuelle sur un support d'impression destiné à être fixé à un produit correspondant aux informations d'identification individuelle.

5. Système de traitement d'informations (1) selon la revendication 4, dans lequel l'imprimante (2) est configurée pour imprimer des informations de code qui contiennent les informations d'identification individuelle, sur le support d'impression.

6. Système de traitement d'informations (1) selon l'une quelconque des revendications 1 à 5, dans lequel les informations sur l'état du produit stockées dans la mémoire (52) du dispositif de traitement d'informations (5) sont mises à jour au moins une fois pendant une période prédéterminée.

7. Système de traitement d'informations (1) selon l'une quelconque des revendications 1 à 6, dans lequel les informations sur l'état comprennent des informations indiquant un état du produit, qui est estimé à partir d'un résultat d'analyse d'une image du produit.

8. Système de traitement d'informations (1) selon l'une quelconque des revendications 1 à 6, dans lequel les informations sur l'état comprennent des informations de contrôle indiquant un état contrôlé pendant que le produit est conservé.

9. Système de traitement d'informations (1) selon la revendication 1 ou 2, comprenant en outre un terminal de magasin (3) capable de communiquer avec le dispositif de traitement d'informations (5),
les informations sur l'état comprenant des informations d'image du produit,
les informations d'identification individuelle étant des informations de caractéristiques qui sont extraites d'informations d'image associées aux informations d'identification individuelle,
le terminal de magasin (3) étant configuré pour comparer des informations de caractéristiques qui sont extraites d'informations d'image d'un produit pour lequel un processus de paiement a été effectué par le dispositif de traitement d'informations (5), avec des informations de caractéristiques qui sont extraites d'informations d'image d'un produit dans le magasin.

10. Procédé de traitement d'informations qui est exécuté entre un terminal utilisateur (7) configuré pour être transporté par un utilisateur et un dispositif de traitement d'informations (5) capable de communiquer avec le terminal utilisateur (7), le procédé comprenant :
l'enregistrement, par le dispositif de traitement d'informations (5), d'informations de produit d'un produit dont le prix doit être réduit dans un magasin, d'informations sur l'état indiquant un état du produit et d'informations relatives au prix proposé du produit, en association les unes avec les autres,
l'acquisition, par le terminal utilisateur (7), à partir du dispositif de traitement d'informations (5), des informations sur l'état et des informations relatives au prix proposé d'un ou d'une pluralité de produits, correspondant à un type de produit sélectionné par l'utilisateur,
l'affichage, par le terminal utilisateur (7), des informations sur l'état acquises et des informations relatives au prix proposé,
l'exécution, par le dispositif de traitement d'informations (5), d'un processus de paiement du produit sur la base d'une demande de paiement du produit correspondant aux informations de produit acquises à partir du terminal utilisateur (7),
l'enregistrement, par le dispositif de traitement d'informations (5), en tant qu'informations sur l'état, d'une image du produit obtenue à un instant où le produit dont le prix doit être réduit devient une cible d'une réduction de prix, en association avec des informations d'identification permettant d'identifier un produit,
la mise à jour, par le dispositif de traitement d'informations (5), de l'image du produit enregistrée en association avec les informations d'identification lorsque l'image du produit est obtenue à chacun d'instants, les instants comprenant un instant auquel un taux de remise est mis à jour après que le produit dont le prix doit être réduit est devenu une cible d'une réduction de prix et un instant auquel un taux de remise n'est pas mis à jour, et
à la réception d'une demande de consultation provenant du terminal utilisateur (7), le fait d'amener, par le dispositif de traitement d'informations (5), l'afficheur (74) du terminal utilisateur (7) à afficher, en tant qu'informations sur l'état, une image de produit correspondant à des informations d'identification d'un produit pour la demande de consultation.

11. Programme configuré pour amener un ordinateur à exécuter un procédé prédéterminé dans un serveur (5) capable de communiquer avec un terminal utilisateur (7) qui est configuré pour être transporté par un utilisateur,
le procédé comprenant :
l'enregistrement d'informations de produit d'un produit dont le prix doit être réduit dans un magasin, d'informations sur l'état indiquant un état du produit et d'informations relatives au prix proposé du produit, en association les unes avec les autres ;
la fourniture au terminal utilisateur (7) des informations sur l'état et des informations relatives au prix proposé d'un ou d'une pluralité de produits, correspondant à un type de produit sélectionné par l'utilisateur ;
l'exécution d'un processus de paiement du produit sur la base d'une demande de paiement du produit correspondant aux informations de produit acquises à partir du terminal utilisateur (7),
l'enregistrement, en tant qu'informations sur l'état, d'une image du produit obtenue à un instant où le produit dont le prix doit être réduit devient une cible d'une réduction de prix, en association avec des informations d'identification permettant d'identifier un produit,
la mise à jour de l'image du produit enregistrée en association avec les informations d'identification lorsque l'image du produit est obtenue à chacun d'instants, les instants comprenant un instant auquel un taux de remise est mis à jour après que le produit dont le prix doit être réduit est devenu une cible d'une réduction de prix et un instant auquel un taux de remise n'est pas mis à jour, et
à la réception d'une demande de consultation provenant du terminal utilisateur (7), le fait d'amener l'afficheur (74) du terminal utilisateur (7) à afficher, en tant qu'informations sur l'état, une image de produit correspondant à des informations d'identification d'un produit pour la demande de consultation.
